# EUROPÄISCHE PATENTSCHRIFT

(11) **EP 2 592 872 B1**
(45) Veröffentlichungstag und Bekanntmachung des Hinweises auf die Patenterteilung: **08.10.2014**
(21) Anmeldenummer: 12188862.2
(22) Anmeldetag: 17.10.2012
(51) Int. Cl.: H04W 40/32, H04W 48/12, H04W 84/18

(54) **Verfahren zum Betreiben eines Multi-Hop-Verbindungsnetzwerkes**
Method for operating a multi-hop connection network
Procédé de fonctionnement d'un réseau de liaison à plusieurs bonds

(30) Priorität: 11.11.2011 DE 102011055267
(43) Veröffentlichungstag der Anmeldung: 15.05.2013
(73) Patentinhaber: Insta Elektro GmbH, 58509 Lüdenscheid (DE)
(72) Erfinder: Funke, Rafael, 33100 Paderborn (DE); Frey, Hannes, 33142 Büren (DE); Mundinger, Harald, 58849 Herscheid (DE); Rosemann, Peter, 58091 Hagen (DE)
(74) Vertreter: Haverkamp, Jens

(56) Entgegenhaltungen:
- US-A1- 2003 204 625
- US-A1- 2006 268 745

## Beschreibung

Die Erfindung betrifft ein Verfahren zum Betreiben eines eine Vielzahl von Netzwerkteilnehmern aufweisenden Multi-Hop-Verbindungsnetzwerkes, welche Netzwerkteilnehmer zur Ausbildung des Verbindungsnetzwerkes durch Bilden einer Vielzahl von jeweils einen Clusterhead aufweisenden Clustern mit wenigstens einem Mitglied eingerichtet worden sind.

Verbindungsnetzwerke setzen sich aus einer Vielzahl von Teilnehmern - den Netzwerkteilnehmern - zusammen, die auch als Knoten oder Netzwerkknoten bezeichnet werden. Die Netzwerke dienen dem Zweck einer Informationsübertragung von einem Netzwerkteilnehmer zu einigen oder allen weiteren Netzwerkteilnehmern. Jeder Netzwerkteilnehmer verfügt über eine Sende- und Empfangseinheit, um die gewünschte Kommunikation betreiben zu können. Wenn die Adresse eines Empfänger-Netzwerkteilnehmers dem Sender nicht bekannt ist und/oder wenn eine Nachricht an mehrere Netzwerkteilnehmer gesendet werden soll, erfolgt die Datenübertragung oftmals im Wege eines sogenannten Broadcasts. Bei dieser Art der Datenübermittlung erhält jeder Netzwerkteilnehmer die gesendete Nachricht und muss dann für sich entscheiden, ob die Nachricht für ihn bestimmt ist oder nicht. Bei größeren Verbindungsnetzwerken bzw. bei solchen Netzwerken, bei denen ein Sendesignal nicht von allen Netzwerkteilnehmern empfangen werden kann, wird zur Verbreitung der Nachricht von jedem Netzwerkteilnehmer, der die Nachricht empfangen hat, diese einmalig wiederholt. Da dieses von allen Netzwerkteilnehmern durchgeführt wird, wird das Verbindungsnetzwerk mit dieser Nachricht geflutet, weshalb dieses Verfahren auch als Flooding bezeichnet wird.

Um die Wahrscheinlichkeit von Nachrichtenkollisionen durch das wiederholende Senden der Nachricht durch jeden einzelnen Netzwerkteilnehmer zu verringern, wartet jeder Teilnehmer vor dem Wiederholen eine zufällig ausgewählte Zeit, typischerweise per Zufall ausgewählt aus einer vordefinierten Zeitperiode. Vor allem in dichten Netzabschnitten - das heißt: in Netzabschnitten mit einer hohen Dichte an Netzwerkteilnehmern - sind dennoch Kollisionen sehr wahrscheinlich, was zur Folge haben kann, dass einzelne Netzwerkteilnehmer oder sogar ganze Teilabschnitte des Verbindungsnetzwerkes die Nachricht nie erfolgreich empfangen.

Um den vorbeschriebenen, durch Flooding bedingten Nachteil zu begegnen ist man dazu übergegangen, Verbindungsnetzwerke zu strukturieren. Dieses erfolgt durch Gruppenbildung, der sogenannten Clusterbildung. Bei einer solchen Clusterbildung werden Teilmengen aus der Menge der Netzwerkteilnehmer zu jeweils einem Cluster zusammengefasst. Organisiert wird ein solches Cluster durch einen Clusterhead. Ziel beim Ausbilden einer solchen Topologie ist es, mit möglichst wenig übertragungswiederholenden Teilnehmern alle Netzwerkteilnehmer zu erreichen. Dies gelingt durch Erzeugen einer ausgedünnten Nachrichtenübermittlungs-Topologie in der vorbeschriebenen Weise. Zum Reduzieren der Netzwerkteilnehmer, die eine Broadcastnachricht wiederholen, werden die Cluster möglichst groß ausgebildet, das heißt: Einem Clusterhead werden möglichst viele Netzwerkteilnehmer als Mitglieder seines Clusters zugeordnet.

Je nach Konzeption der Topologie des Verbindungsnetzwerkes, kann die Topologie statisch vorgegeben sein oder dynamisch erfolgen. Dabei bezieht sich eine solche Clusterbildung auf die Bestimmung derjenigen Netzwerkteilnehmer, die ausgewählt werden, um ein Broadcastpaket erneut zu senden und auf diese Weise weiter zu verbreiten. Bei einer statischen Topologie werden diese Kommunikatoren bei der Initialisierung des Verbindungsnetzwerkes festgelegt. Bei einer dynamischen Topologie erfolgt dieses im Zusammenhang mit jedem Broadcast und ist auch nur für diesen Broadcast gültig. Bei einer dynamischen Topologie entscheiden die Netzwerkteilnehmer reaktiv, ob sie ein Broadcastpaket wiederholen oder nicht. Typischerweise wird die diesbezügliche Entscheidung abhängig von den von einem Netzwerkteilnehmer bisher empfangenen oder mitgehörten Broadcastpaketen gemacht. Da jeder Netzwerkteilnehmer derjenige sein kann, der ein Broadcastpaket zu wiederholen hat, muss eine ausreichend lange Wartezeit zwischen einem ersten Broadcastpaketempfang und einer eventuellen Paketwiederholung vorgesehen sein. Um mit einer solchen Topologie nur vergleichbar geringe Kollisionswahrscheinlichkeiten in Kauf zu nehmen, müssen daher relativ lange Wartezeiten eingeräumt werden, was wiederum zu spürbaren Verzögerungen in der Verbreitung eines Broadcasts führen kann.

Die Netzwerkteilnehmer eines solchen Verbindungsnetzwerkes sind typischerweise Geräte mit einer relativ hohen Prozessorleistung und hoher Speicherkapazität. Es besteht jedoch der Wunsch, Verbindungsnetzwerke auch unter Beteiligung von Geräten aufbauen zu können, die nur geringe Anforderungen an eine Prozessorleistung und/oder die Speicherkapazität und/oder an die Sende- und Empfangsleistung gestellt sind. Ein derartiger Anwendungsfall wäre beispielsweise ein im Rahmen eines Gebäudeinstallationssystems aufgebautes Verbindungsnetzwerk, bei dem die Netzwerkteilnehmer die Aktoren und Sensoren eines solchen Gebäudeinstallationssystems sind. Aus DE 10 2006 062 190 B3 ist eine Hausautomatisierungsvorrichtung bekannt, deren Aktoren und Sensoren miteinander vernetzt sind.

US 2004/0003111 A1 beschreibt ein Verfahren zum Einrichten und Betreiben eines Mehr-Cluster-Netzwerkes. Zum Einrichten und Betreiben eines solchen, mehrere Cluster mit jeweils einem Clusterhead umfassenden Netzwerkes wird eine als *Designated Device* angesprochene Steuereinheit mit umfangreicheren Ressourcen, als bei den Netzwerkteilnehmern vorhanden, benötigt. Im Rahmen der Einrichtung des Netzwerkes kommt dieser Steuereinheit die Rolle einer Zuordnung von eindeutigen Clusterhead-identifikationen zu. Bei einer Nachrichtenübermittlung innerhalb des eingerichteten Netzwerkes ist diese Steuereinheit zuständig, den kürzesten Weg der Nachrichtenübermittlung zu bestimmen. Diese Steuereinheit ist den Netzwerkteilnehmern übergeordnet. Bei dem in diesem Dokument beschriebenen Verfahren lassen sich zwar auch Netzwerkteilnehmer zu Clustern zusammenfassen, die nur geringe Ressourcen aufweisen. Jedoch ist gemäß dem vorbekannten Verfahren vorgesehen, dass die in den Netzwerkteilnehmern nicht vorhandenen Ressourcen durch die übergeordnete Steuereinheit ausgeführt werden.

US 2003/204625 A1 offenbart ein Verfahren, bei dem das Verbindungsnetzwerk bei seiner Initialisierung selbstorganisierend eingerichtet wird, was im Rahmen dieser Ausführungen auch als ein möglicher Vorgang des Betriebs des Verbindungsnetzwerkes anzusehen ist. Es ist nicht erforderlich, dass die Netzwerkteilnehmer gegenseitig ihre Identifikation bzw. Adressen kennen. Mithin können bereits aus diesem Grunde die Anforderungen an einen Netzwerkteilnehmer reduziert sein. Dabei ist bei diesem Verfahren von Besonderheit, dass bei der Einrichtung des Verbindungsnetzwerkes durch Clusterbildung im Unterschied zu der herrschenden Meinung nicht im Vordergrund steht, die Zahl der Mitglieder eines Clusters möglichst groß vorzusehen und damit die Anzahl der Cluster möglichst klein zu halten. Für dieses Verfahren ist es unerheblich, wenn die Anzahl der Cluster größer und somit die Anzahl der Mitglieder eines Clusters kleiner ist. Ein Cluster umfasst zumindest ein Mitglied. Typischerweise umfasst ein Cluster jedoch mehrere Mitglieder. Bei diesem Verfahren können hinsichtlich ihrer diesbezüglichen Ressourcen unterschiedliche Netzwerkteilnehmer in die selbstorganisierende Clusterbildung eingebunden werden. Es ist also durchaus möglich, dass unterschiedliche Netzwerkteilnehmer unterschiedliche Speicherkapazitäten aufweisen können. Damit ist es möglich, dass prinzipiell jeder Netzwerkteilnehmer die Funktion eines Clusterheads einnehmen kann, wobei das dem Clusterhead zugeordnete Cluster hinsichtlich seiner Mitgliederanzahl maximal mit nur so vielen Mitgliedern eingerichtet wird, wie dieses die Speicherressourcen des jeweiligen Netzwerkteilnehmers gestatten. Ist die Clusterbildung des Verbindungsnetzwerkes durchgeführt, wird für die Kommunikation zwischen einem Clusterhead mit demjenigen eines benachbarten Clusters ein Clustermitglied als Gateway ausgewählt bzw. diesem Clustermitglied wird diese Funktionalität zugeteilt.

Bei diesem Verfahren wird somit keine den Netzwerkteilnehmern übergeordnete Steuereinheit zum Einrichten des Verbindungsnetzwerkes und für die spätere Informationsübermittlung benötigt. Das Verbindungsnetzwerk wird somit durch hierarchisch gleichgestellte Netzwerkteilnehmer eingerichtet. Es versteht sich, dass im Zuge des Einrichtens und der Zuordnung der Funktionalität "Clusterhead" innerhalb eines Clusters durchaus eine Hierarchie aufgebaut wird. Bei dem beanspruchten Verfahren kann jeder Netzwerkteilnehmer prinzipiell die Funktion eines Clusterheads übernehmen. Vor diesem Hintergrund ist der Aufbau auch größerer Multi-Hop-Verbindungsnetzwerke und der Betrieb eines solchen mit einem Minimum an Ressourcen möglich. Begründet liegt dieses in der Selbstorganisation hierarchisch gleicher Netzwerkteilnehmer mit den Schritten des Verfahrens.

Ausgehend von dem aus diesem Dokument bekannten Verfahren zum Übermitteln von Informationen von einem Cluster zu dem nächsten unter Verwendung der vorgenannte Gateways liegt der Erfindung die Aufgabe zugrunde, eine Überwachung des Übermittlungsfortschrittes auf einfache Weise zu ermöglichen.

Gelöst wird diese Aufgabe erfindungsgemäß durch ein Verfahren mit den Merkmalen des Anspruchs 1.

Mit diesem Verfahren wird mit einfachen Mitteln der Übermittlungsfortschritt der von einem Clusterhead gesendeten Nachricht überwacht. Ausgenutzt wird hierbei, dass im Zuge der Clusterbildung beim Initialisierungsprozess Netzwerkteilnehmer, die keine Gateway-Funktion inne haben, allerdings sich an geeigneten Positionen innerhalb des Verbindungsnetzwerkes befinden, nicht nur die Identifikation des Clusterheads ihres eigenen Clusters gespeichert haben, sondern auch diejenige des Clusterheads aus dem benachbarten Cluster. Dadurch ist es möglich, auf zumindest einer Parallelstrecke zu der originären Datenübermittlungsstrecke von einem ersten Clusterhead über ein Gateway zum Clusterhead des benachbarten Clusters den Übermittlungsfortschritt zu überwachen und gegebenenfalls unterstützend einzugreifen.

Wenn ein Clusterhead eines ersten Clusters eine Broadcastnachricht sendet, wird diese von den Mitgliedern seines Clusters empfangen. Zum Weiterleiten der Nachricht an benachbarte Cluster wiederholen grundsätzlich nur das oder die Gateways die Nachricht. Wird die Nachricht von dem Clusterhead des benachbarten Clusters empfangen, wiederholt auch dieser die Nachricht, so dass auf diese Weise fortgesetzt die Nachricht des ersten Clusterheads über das gesamte Verbindungsnetzwerk verbreitet wird. Hat der Clusterhead des benachbarten Clusters die Nachricht des ersten Clusterheads gesendet, wird diese auch von dem oder den Mitgliedern des ersten Clusters empfangen, die sich im Sendebereich des Clusterheads des benachbarten zweiten Clusters befinden. Da diesem oder diesen Netzwerkteilnehmern die Identifikation des Clusterheads des benachbarten Clusters bekannt ist, wird diesen Netzwerkteilnehmern durch Empfang der von dem Clusterhead des benachbarten Clusters gesendeten Nachricht bestätigt, dass diese ordnungsgemäß bei dem Clusterhead des benachbarten Clusters angekommen ist. Diese Netzwerkteilnehmer und Mitglieder des ersten Clusters reagieren darauf damit, dass die ursprünglich von dem Cluster des eigenen Clusters empfangene Nachricht bzw. der Eingang einer solchen gelöscht wird. Wird innerhalb einer vorgegebenen Wartezeit von diesen Netzwerkteilnehmern als Mitglieder des sendenden Clusters die Nachricht nicht nochmals von dem Clusterhead des benachbarten Clusters empfangen, wiederholen der oder diese Netzwerkteilnehmer die Nachricht, so dass der Clusterhead des benachbarten Clusters die Nachricht sodann von einem dieser Netzteilnehmer erhält. Dabei ist vorgesehen, dass eine Wiederholung der Nachricht durch ein mithörendes Mitglied des sendenden Clusters mit unterschiedlichem Delay vorgesehen ist. Sobald jedoch ein erstes mithörendes Mitglied die Nachricht wiederholt hat, wird nach Empfang dieser Nachricht durch das oder die weiteren mithörenden Mitglieder in diesen der Modus "Nachrichtenwiederholung nach Delay" ausgeschaltet. Insofern besteht zwischen den einzelnen mithörenden Mitgliedern eines sendenden Clusters in gewisser Weise ein Wettbewerb bezüglich einer unter Umständen notwendigen Wiederholung einer vom Cluster bzw. von dem Gateway an einen benachbarten Clusterhead gesendeten Nachricht.

Bei diesem Konzept ist zwar ein primärer Weg einer Nachrichtenübertragung von einem Clusterhead zu einem benachbarten über die Gateways vorgegeben, jedoch sind gleichzeitig ein oder mehrere parallele Nachrichtenübertragungswege vorhanden, von denen einer aktiv wird, wenn eine Nachrichtenübermittlung auf einer Strecke des primären Übertragungsweges nicht stattgefunden hat. Dieses kann an Störungen in der Übertragung oder auch an einer Störung eines in die Nachrichtenübermittlung eingebundenen Netzwerkteilnehmers liegen. Insofern arbeiten diese Netzwerkteilnehmer reaktiv. Es versteht sich, dass auch dann, wenn ein Mitglied des sendenden Clusters die Nachricht wiederholen sollte, dieser Netzwerkteilnehmer erneut auf die Nachrichtenwiederholung des empfangenden Clusterheads warten kann. Empfängt ein Netzwerkteilnehmer trotz Wiederholens der Nachricht des empfangenden Clusterheads keine Empfangsbestätigungsbotschaft in Form der von dem empfangenden Clusterhead gesendeten Nachricht, kann die Nachricht erneut gesendet werden. Auch ist es möglich, ein Störsignal zu generieren. Die Clusterbildung vom Einrichten des Netzwerkes wird zweckmäßiger Weise wie folgt durchgeführt:

Zum Zwecke der Clusterbildung wird in einem ersten Schritt von einem ersten, als Clusterhead definierten Netzwerkteilnehmer ein Initialisierungsbroadcast gesendet. Dieses kann prinzipiell von jedem Netzwerkteilnehmer ausgehend vorgenommen werden. Hierbei handelt es sich lediglich um denjenigen Teilnehmer, von dem die Einrichtung des Verbindungsnetzwerkes ausgehen soll. Dieser Initialisierungsclusterhead ist hierarchisch den anderen Netzwerkteilnehmern, mit Ausnahme derjenigen, die zu Mitgliedern des von dem Clusterhead organisierten Clusters werden, prinzipiell gleichgestellt. Durchaus möglich ist es, dass dieser erste Schritt gleichzeitig von mehreren Netzwerkteilnehmern aus gestartet wird.

Diejenigen Netzwerkteilnehmer, die diesen Initialisierungsbroadcast mit hinreichender Signalstärke empfangen, legen in einem hierfür konzipierten Speicher die in dem Broadcast enthaltene Identifikation des Clusterheads ab. Diese Netzwerkteilnehmer antworten anschließend, typischerweise nach einer gewissen Wartezeit mit einer Empfangsbestätigungsbotschaft.

Von dem Clusterhead werden eine vorbestimmte Maximalanzahl an Netzwerkteilnehmeridentifikationen gespeichert, die er durch Empfang der Empfangsbestätigungsbotschaften erhalten hat. Dabei kann die Maximalanzahl der zu speichernden Identifikationen von den diesbezüglichen Ressourcen des Clusterheads abhängig sein. Hat der Clusterhead die Maximalanzahl an Netzwerkteilnehmeridentifikationen gespeichert und damit seine diesbezüglichen Speicherkapazitäten erschöpft, wird dieses Cluster geschlossen. Dieses Cluster beinhaltet sodann den Clusterhead und diejenigen Netzwerkteilnehmer deren Identifikation in dem Clusterhead gespeichert sind. Mithin sind diese Netzwerkteilnehmer Mitglieder dieses Clusters. Empfängt der Clusterhead nur eine geringere Anzahl an Empfangsbestätigungsbotschaften als Speicherplätze zur Verfügung stehen, hat dieses Cluster eine entsprechend geringere Anzahl an Mitgliedern.

Typischerweise wird der Clusterhead Empfangsbestätigungsbotschaften auch von Netzwerkteilnehmern empfangen, nachdem das Cluster bereits geschlossen ist. Dann kann die in der Empfangsbestätigungsbotschaft enthaltene Netzwerkteilnehmeridentifikation nicht mehr von diesem Clusterhead gespeichert werden. In diesen Fällen antwortet der Clusterhead auf eine solche Empfangsbestätigungsbotschaft mit einer Ablehnungsbotschaft. Diese enthält auch die Identifikation desjenigen Netzwerkteilnehmers dessen Empfangsbestätigungsbotschaft abgelehnt worden ist. Dass eine auch vor Abschluss eines Clusters empfangene Empfangsbestätigungsbotschaft bzw. die darin enthaltene Identifikation nicht in dem Clusterhead gespeichert wird, kann auch darin begründet sein, dass die Signalgüte der Empfangsbestätigungsbotschaft unterhalb eines vorgegebenen Schwellwertes liegt und daher als zu schwach angesehen wird.

Netzwerkteilnehmer, die eine solche Ablehnungsbotschaft von allen in Reichweite befindlichen Clusterheads mit ihrer Identifikation erhalten haben, reagieren auf den Erhalt dieser Botschaft damit, dass sie selbst zu einem Clusterhead werden. Dieser neue Clusterhead sendet zum Auffinden der in seinem Cluster zu organisierenden Mitglieder einen Initialisierungsbroadcast, wie vorstehend beschrieben. Die von diesem weiteren Initialisierungsbroadcast angesprochenen Netzwerkteilnehmer reagieren, wie dieses vorstehend bereits mit der Bildung des ersten Clusters beschrieben ist. Zwar speichern alle Netzwerkteilnehmer, die diesen Initialisierungsbroadcast empfangen, die Identifikation dieses Clusterheads. Allerdings senden nur diejenigen Netzwerkteilnehmer, die diesen Initialisierungsbroadcast empfangen haben, eine Empfangsbestätigungsbotschaft, die zuvor noch keine Clusterhead-Identifikation gespeichert hatten, mithin noch nicht Mitglied eines Clusters sind. Der Einrichtungsprozess läuft so lange weiter, bis alle Netzwerkteilnehmer einem Clusterhead zugeordnet und damit Mitglied eines Clusters sind. Es versteht sich, dass ausgehend von einem ersten Clusterhead die Ausbreitung der Nachricht in dem Verbindungsnetzwerk in der vorbeschriebenen Weise mehrfach parallel erfolgen kann.

Um eine robuste und verlässliche Kommunikation durch das Verbindungsnetzwerk zu gewährleisten, werden im Anschluss an die Clusterbildung Gateways bestimmt, über die die Kommunikation von dem Clusterhead des einen Clusters zu dem Clusterhead eines benachbarten Clusters erfolgt. Ein solches Gateway kann als Einfach-Gateway oder als Doppel-Gateway ausgelegt sein. Ein Einfach-Gateway ist durch jeweils einen Hop von den beiden Clusterheads entfernt. Bei einem Doppel-Gateway sind die beiden Clusterheads zwei Hops voneinander entfernt. Diese beiden Hops bilden sodann das Doppel-Gateway. Dabei kann die Auswahl des Gateways einer Entscheidungsregel folgen, gemäß der dasjenige Mitglied eines Clusters als Gateway zu einem benachbarten Cluster wird, das die Signale von beiden Clusterheads in der besten Signalqualität empfängt. Hierbei wird man vor allem auf die Signalstärke des empfangenen Signals abheben.

Um Kollisionen bei dem Absetzen der Empfangsbestätigungsbotschaften durch Netzwerkteilnehmer nach Erhalt eines Initialisierungsbroadcasts zu vermeiden, ist gemäß einem bevorzugten Ausführungsbeispiel vorgesehen, dass die Empfangsbestätigungsbotschaften von jedem Netzwerkteilnehmer erst nach Ablauf einer Wartezeit gesendet werden, wobei die Wartezeiten der Netzwerkteilnehmer unterschiedlich sind. Gemäß einem Ausführungsbeispiel wird die Wartezeit mit einem Zufallsgenerator aus einem vorgegebenen Zeitintervall ausgewählt.

Ebenso wie eine Empfangssignalfilterung seitens eines Empfangsbestätigungsbotschaften empfangenden Clusterheads hinsichtlich der Signalstärke erfolgen kann, ist dieses auch bei den Netzwerkteilnehmern im Zusammenhang mit dem Empfang eines Initialisierungsbroadcasts zweckdienlich. Bei einer solchen Ausgestaltung senden nur diejenigen Netzwerkteilnehmer eine Empfangsbestätigungsbotschaft, wenn das Empfangssignal des Initialisierungsbroadcasts in einer Signalstärke empfangen worden ist, die oberhalb eines vorgegebenen Schwellwertes liegt.

Die vorbeschriebene Einrichtung des Verbindungsnetzwerkes ermöglicht eines Nachrichtenübermittlung innerhalb des Verbindungsnetzwerkes vor allem auch im Rahmen eines Broadcasts, bei dem der Übermittlungsfortschritt der von einem Clusterhead gesendeten Nachricht überwacht wird. Auch dieses ist ein möglicher Betrieb des Verbindungsnetzwerkes. Ausgenutzt wird hierbei, dass im Zuge der Clusterbildung beim Initialisierungsprozess Netzwerkteilnehmer, die keine Gateway-Funktion inne haben, allerdings sich an geeigneten Positionen innerhalb des Verbindungsnetzwerkes befinden, nicht nur die Identifikation des Clusterheads ihres eigenen Clusters gespeichert haben, sondern auch diejenige des Clusterheads aus dem benachbarten Cluster. Dadurch ist es möglich, auf zumindest einer Parallelstrecke zu der originären Datenübermittlungsstrecke von einem ersten Clusterhead über ein Gateway zum Clusterhead des benachbarten Clusters den Übermittlungsfortschritt zu überwachen und gegebenenfalls unterstützend einzugreifen.

Weitere Vorteile und Ausgestaltungen der Erfindung ergeben sich aus der nachfolgenden Beschreibung eines Ausführungsbeispiels unter Bezugnahme auf die beigefügten Figuren. Es zeigen:
- **Fig. 1:**: eine schematisierte Darstellung eines Verbindungsnetzwerkes vor einer Organisation desselben,
- **Fig. 2:**: ein Flussdiagramm eines Verfahrens zum selbstorganisierenden Clustern eines Multi-Hop-Verbindungsnetzwerkes,
- **Fig. 3a:**: das Verbindungsnetzwerk der Figur 1 nach einer Clusterbildung,
- **Fig. 3b:**: das Verbindungsnetzwerk der Figur 3a bei einer Informationsübertragung von dem Clusterhead eines ersten Clusters zu demjenigen eines benachbarten Clusters auf der präferierten Datenübermittlungsroute und
- **Fig. 3c:**: eine Darstellung des Verbindungsnetzwerkes der Figur 3b bei einer Datenübermittlung, vorgesehen wie in Figur 3b, jedoch vorgenommen über eine Ausweichübermittlungsroute.

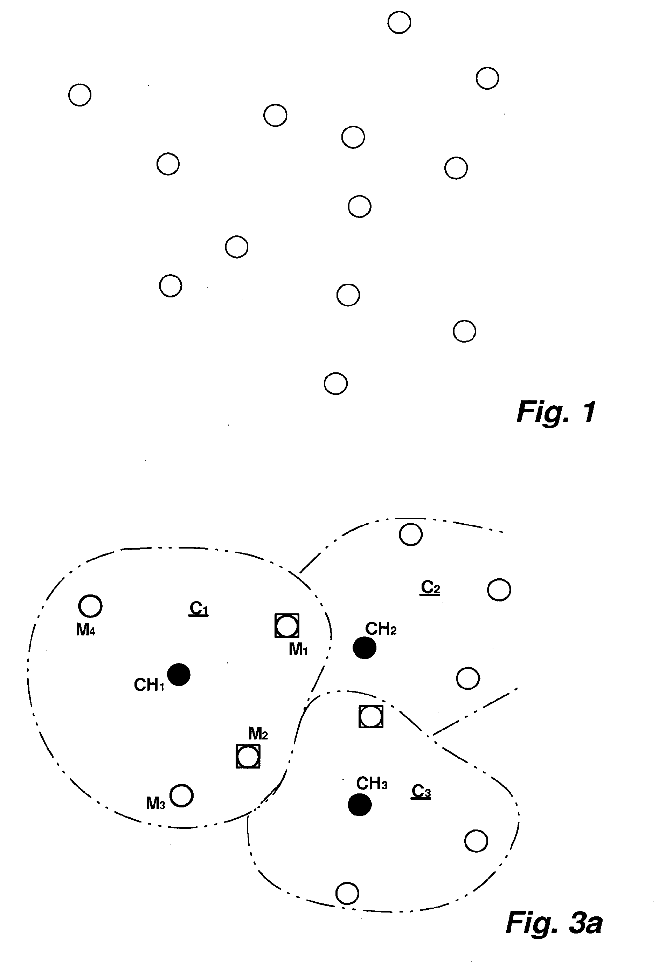

Figur 1 zeigt eine Vielzahl von Netzwerkteilnehmern, dargestellt durch Kreise. Bei dem dargestellten Ausführungsbeispiel handelt es sich bei den Netzwerkteilnehmern um Sensoren und Aktoren eines Gebäudeinstallationssystems. Gezeigt sind in Figur 1 der Übersicht halber nur einige wenige Aktoren und Sensoren. Bei den Sensoren handelt es sich um manuell betätigbare Bedieneinheiten, wie Taster, Touchscreen-Displays oder dergleichen und um solche, die bestimmte Parameter erfassen, wie etwa die Helligkeit oder die Temperatur in einem Raum. Bei den Aktoren handelt es sich um angesteuerte Installationen, wie beispielsweise die Beleuchtung, die Klimatisierung oder etwa vorhandene Jalousien. Die vorbeschriebene Aufzählung ist beispielhaft und nicht abschließend zu verstehen, da es im Gebäudeinstallationsbereich eine Vielzahl weiterer Sensoren und Aktoren gibt. Tatsächlich umfasst das aus den Netzwerkteilnehmern aufgebaute Verbindungsnetzwerk eine weitaus größere Anzahl an Netzwerkteilnehmern, als in Figur 1 gezeigt. Für die Zwecke einer beispielhaften Erläuterung des beanspruchten Verfahrens ist die Darstellung der Figur 1 jedoch ausreichend.

Die Sensoren und Aktoren als Netzwerkteilnehmer stehen bei dem dargestellten Ausführungsbeispiel untereinander in einer Funkverbindung. Die Aktoren und Sensoren selbst sind nur mit beschränkten Ressourcen ausgestattet, was die Güte, beispielsweise die Stärke des Sendesignals und die Kapazitäten an Speicherplatz zum Hinterlegen von Netzwerkteilnehmeridentifikationen betrifft. Dabei können die einzelnen Netzwerkteilnehmer durchaus auch unterschiedliche Ressourcen aufweisen. Bei dem dargestellten Ausführungsbeispiel verfügen die Netzwerkteilnehmer für die Zwecke einer Kommunikation im Verbindungsnetzwerk über einen Speicher, in dem vier Netzwerkteilnehmeridentifikationen abgelegt werden können. Darüber hinaus kann jeder Netzwerkteilnehmer eine ihm zugeordnete Funktion sowie eine Broadcastnachricht, letztere zumindest vorübergehend, speichern.

Die Netzwerkteilnehmer des Verbindungsnetzwerkes des beschriebenen Ausführungsbeispiels verfügen über mehrere Caches als Puffer-Speicher. Jeder Cache verfügt über eine bestimmte Anzahl an maximal möglichen Einträgen. Die unterschiedlichen Caches dienen zum Ablegen von Identifikationen (Adressen) in Reichweite befindlicher weiterer Netzwerkteilnehmer mit besonderen Funktionen. Ein Cache dient etwa zum Ablegen der Identifikationen der in Reichweite befindlichen Clusterheads. Ein weiterer Cache dient zum Hinterlegen der Identifikationen von Gateways (Einfach-Gateways und Doppel-Gateways). Ein weiterer Cache dient zum Zwischenspeichern von empfangenen Nachrichten. Die Speicherkapazität eines Caches zum Zwischenspeichern von Clusterhead-Identifikationen oder eines solchen zum Ablegen der Identifikationen von Gateways kann beispielsweise über 16 Eintragungsplätze verfügen. Derjenige, zuständig für die Zwischenspeicherung von empfangenen Nachrichten, benötigt grundsätzlich nur eine geringere Anzahl an möglichen Einträgen.

Die Verwaltung der Einträge in den einzelnen Caches erfolgt im Wege einer an sich bekannten Cache-Verwaltungs-Strategie.

Aufgrund der geringen Speicherplatzressourcen versteht es sich, dass die einzelnen Netzwerkteilnehmer nicht die Teilnehmeridentifikationen sämtlicher Netzwerkteilnehmer speichern können. Gerade dieses macht die Netzwerkteilnehmer besonders ressourcensparend. Vor dem Einrichten des Netzwerkes, was nachstehend beschrieben werden wird, sind die Netzwerkteilnehmer hierarchisch nicht geordnet. Vor dem Hintergrund der geringen Ressourcen der Netzwerkteilnehmer wird das Verbindungsnetzwerk entsprechend eingerichtet, was im vorliegenden Fall selbstorganisierend durch Clusterbildung erfolgt. Durch die selbstorganisierende Einrichtung des Verbindungsnetzwerkes werden, wie sich dieses noch aus der nachstehenden Beschreibung deutlicher ergeben wird, die durch jeden einzelnen Netzwerkteilnehmer bereitgestellten Ressourcen genutzt und nur soweit in die Organisation des Verbindungsnetzwerkes eingebracht, wie dieses von jedem Netzwerkteilnehmer möglich ist. Zudem ist die Sendereichweite der Netzwerkteilnehmer der Figur 1 nicht so groß, dass der durch die Netzwerkteilnehmer insgesamt abgedeckte Raum überbrückt werden könnte. Insofern wird bei der Einrichtung des Verbindungsnetzwerkes, das heißt: bei der Einrichtung der individuellen Netzwerkteilnehmer in Bezug auf ihre Funktion innerhalb des Netzwerkes, die jedem Netzwerkteilnehmer zuteil wird, die räumliche Anordnung der Netzwerkteilnehmer zueinander und die jeweiligen Ressourcen berücksichtigt, ohne eine übergeordnete Steuereinheit zu benötigen. Insofern werden bei diesem Konzept die in den Netzwerkteilnehmern vorhandenen Ressourcen optimal genutzt. Dieses Verfahren berücksichtigt bereits, dass unterschiedliche Netzwerkteilnehmer über unterschiedliche Ressourcen verfügen können. Dass ein robustes Verbindungsnetzwerk sich auch ohne eine solche Steuereinheit mit minimalen Ressourcen einrichten und betreiben lässt, ist Gegenstand der beanspruchten Verfahren, die nachstehend im Wege eines Ausführungsbeispiels näher erläutert sind.

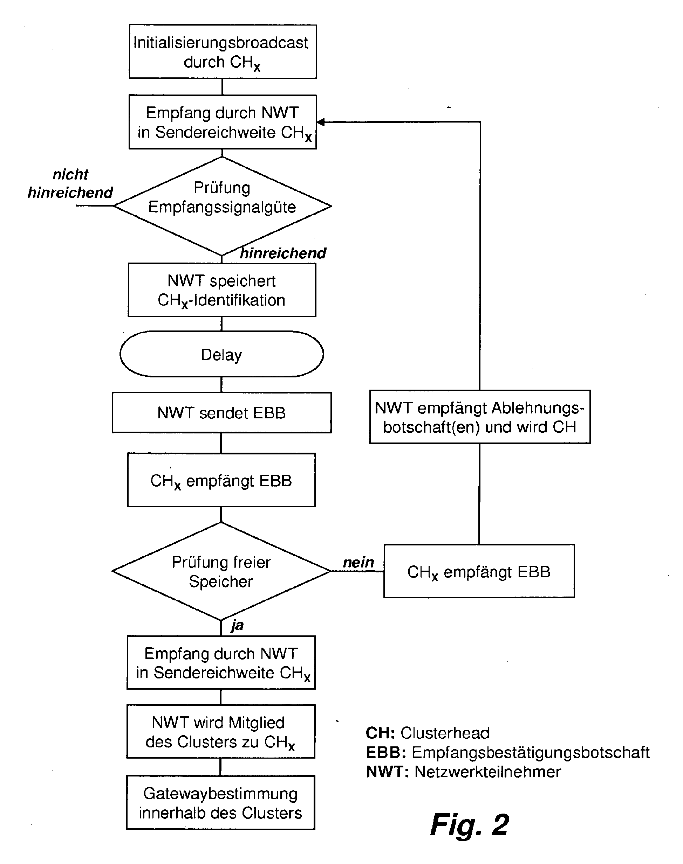

Bei dem dargestellten Ausführungsbeispiel wird das Verbindungsnetzwerk wie folgt eingerichtet bzw. initialisiert (siehe auch Figur 2):

### Schritt 1:

Von einem Netzwerkteilnehmer wird der Initialisierungsprozessgestartet. Dieser Netzwerkteilnehmer bildet einen ersten Clusterhead CH₁. Dieser Clusterhead CH₁ sendet einen Initialisierungsbroadcast mit der aufgrund seiner Ressourcen zur Verfügung stehenden Sendestärke. Der Initialisierungsbroadcast wird von denjenigen Netzwerkteilnehmern empfangen, die sich im Sendebereich des Clusterheads CH₁ befinden. Diese in Kommunikationsreichweite befindlichen Netzwerkteilnehmer werden im Rahmen dieser Ausführungen auch als direkte Nachbarn angesprochen. Aufgrund der typischerweise in einem Gebäude unterschiedlichen Ausbreitungscharakterisik gesendeter Nachrichten, können sich die den Initialisierungsbroadcast empfangenden Netzwerkteilnehmer durchaus in einem sehr unterschiedlichen räumlichen Abstand zu dem Clusterhead CH₁ befinden.

Typischerweise erfolgt die Initialisierung, d. h. das Aussenden einer Suchanfrage, wie vorbeschrieben, nach der Inbetriebnahme nach Ablauf einer zufälligen Zeitspanne. Unterschiedliche Netzwerkteilnehmer werden typischerweise zu unterschiedlichen Zeiten einen solchen Initialisierungsbroadcast aussenden, sodass die Verbreitung zwar prinzipiell ausgehend von einem ersten Clusterhead möglich ist, typischerweise allerdings eine Clusterbildung von unterschiedlichen Initialclusterheads beginnt.

### Schritt 2:

Diejenigen Netzwerkteilnehmer, die diesen Initialisierungsbroadcast empfangen, prüfen bei dem dargestellten Ausführungsbeispiel in einem ersten Schritt ihre Eignung, dem von dem Clusterhead CH₁ zu organisierenden Cluster zugehörig sein zu können. Festgemacht wird dieses über die Empfangssignalstärke. Wenn ein Netzwerkteilnehmer den Initialisierungsbroadcast des Clusterheads CH₁ empfängt, das empfangene Signal jedoch unterhalb eines vorgegebenen Schwellwertes hinsichtlich der Signalstärke liegt, verhält sich dieser Netzteilnehmer ruhig und legt die empfangene Identifikation des Clusterheads CH₁ nicht in seinem Speicher ab. Überschreitet die Empfangssignalstärke den Schwellwert, speichern diese Netzteilnehmer die Identifikation des Clusterheads CH₁. Nach einer vorgegebenen Wartezeit (Delay) senden diese Netzwerkteilnehmer eine Empfangsbestätigungsbotschaft, wobei diese Botschaft von den einzelnen Netzwerkteilnehmern zeitversetzt gesendet wird. Eine Wartezeit zwischen 2 und 10 µs wird für dieses Delay typischerweise vorgesehen und mittels eines Zufallgenerators bei jedem Netzteilnehmer ausgewählt.

### Schritt 3:

Der Clusterhead CH₁ empfängt sukzessive Empfangsbestätigungsbotschaften von Netzwerkteilnehmern, die seinen Initialisierungsbroadcast mit hinreichender Signalstärke empfangen haben. In der Reihenfolge des Einganges der Empfangsbestätigungsbotschaften speichert der Clusterhead CH₁ die darin enthaltene Identifikation des jeweiligen die Empfangsbestätigungsbotschaft sendenden Netzwerkteilnehmers. Diejenigen Netzwerkteilnehmer, deren Identifikation von dem Clusterhead CH₁ gespeichert wird, sind sodann Mitglieder des von dem Clusterhead CH₁ organisierten Clusters C₁. Bei dem Ausführungsbeispiel der Figur 1 umfasst das Cluster C₁ vier auf diese Weise ermittelte Mitglieder M₁ - M₄ Da mit vier Mitgliedern die diesbezügliche Speicherkapazität des Clusterheads CH₁ erschöpft ist, wird mit der Speicherung des vierten Mitgliedes M₄ das Cluster C₁ geschlossen.

Um die weiteren Netzwerkteilnehmer ebenfalls durch Clusterbildung zu organisieren, werden für die weitere Initialisierung die nachfolgenden *Schritte 4 und 5* vorgenommen, während der sich daran anschließende *Schritt* 6 die Einrichtung der Kommunikationspfade betrifft.

### Schritt 4:

Wird von dem Clusterhead CH₁ eine Empfangsbestätigungsbotschaft erhalten, wenn die zur Verfügung stehenden Speicherplätze bereits vergeben sind, sendet der Clusterhead CH₁ eine Ablehnungsbotschaft, die auch die Identifikation desjenigen Netzwerkteilnehmers beinhaltet, von dem er die abzulehnende Empfangsbestätigungsbotschaft erhalten hat.

### Schritt 5:

Derjenige Netzteilnehmer, der auf seine Identifikation eine solche Ablehnungsbotschaft erhalten hat, wird durch den Erhalt dieser Ablehnungsbotschaft zum eigenständigen Clusterhead oder ordnet sich einem anderen zu. In Figur 3a ist dieses der Clusterhead CH₂. Dieser Netzwerkteilnehmer fungiert fortan als Clusterhead und ist, da sein verfügbarer Identifikationsspeicher noch leer ist, bestrebt ein eigenes Cluster aufzubauen. Dieses vollzieht sich mit denselben Schritten, wie dieses vorstehend zu dem Cluster C₁ beschrieben worden ist. Dabei wird *Schritt 2* mit der Maßgabe durchgeführt, dass nur diejenigen Netzwerkteilnehmer eine Empfangsbestätigungsbotschaft senden, die sich im Sendebereich des von dem Clusterhead CH₂ gesendeten Initialisierungsbroadcasts befinden, dieses Signal in einer hinreichenden Stärke empfangen haben und in deren Speicher noch kein Clusterhead mit seiner Identifikation abgelegt ist. Somit antworten nur diejenigen Netzteilnehmer dem Aufruf, des Clusterheads CH₂, die noch keinem anderen Cluster angehören.

Diese Prozessschritte laufen so lange weiter, bis alle Netzwerkteilnehmer einem Clusterhead zugeordnet sind. Die Beschreibung der vorstehenden selbstorganisierenden Initialisierung macht deutlich, dass ausgehend von einem oder typischerweise mehreren Ursprungsclusterheads, bei dem beschriebenen Ausführungsbeispiel allein dem Clusterhead CH₁, sich die Clusterbildung sukzessive ausbreitet, überall dort hin, wo Netzwerkteilnehmer eine Datenverbindung zueinander haben.

In diesem Schritt ist ferner vorgesehen, dass alle Netzwerkteilnehmer, die den Initialisierungsbroadcast des Clusterheads CH₂ mit hinreichender Signalstärke empfangen, seine Identifikation in ihrem Speicher ablegen, und zwar unabhängig davon, ob diese bereits Mitglied eines Clusters sind oder nicht. Dieses führt zu dem Ergebnis, dass Mitglieder unterschiedlicher Cluster, die im Bereich der Clustergrenzen liegen, die Nachrichten sowohl des eigenen Clusterheads als auch diejenigen des benachbarten Clusterheads empfangen und zuordnen können.

Figur 3a zeigt beispielhaft das dargestellte Verbindungsnetzwerk mit einer Clusterbildung, erstellt mit den vorbeschriebenen Schritten.

Es versteht sich, dass auch nach einem initialen Vorgang der Clusterbildung dieses im Laufe des Betriebs des Verbindungsnetzwerkes wiederholt werden kann. Dieses bietet sich beispielsweise an, wenn in das Verbindungsnetzwerk neue Netzwerkteilnehmer integriert werden.

### Schritt 6:

Ist die Clusterbildung vollzogen oder zumindest in Abschnitten vollzogen, werden die Datenübertragungswege definiert. Um eine Datenübertragung zwischen den Clusterheads benachbarter Cluster, nachfolgend anhand der benachbarten Cluster C₁ und C₃ beispielhaft erläutert, durchführen zu können, werden Gateways definiert. Diese Gateways arbeiten nach Art eines Repeaters, die eine von einem ersten Clusterhead übermittelte Nachricht wiederholen, um auf diese Weise diese an den Clusterhead des benachbarten Clusters weiterzugeben. Im Falle der benachbarten Cluster C₁, C₃ ist eine direkte Verbindung zwischen dem Clusterhead CH₁ und dem Clusterhead CH₃ nicht möglich. Es gibt verschiedene Möglichkeiten einer Entscheidungsfindung, welches Mitglied eines Clusters die Funktion eines Gateways zum benachbarten Cluster übernehmen soll. Die Auswahl kann anhand des Gerätetyps, der durch diesen Netzwerkteilnehmer repräsentiert ist, erfolgen. Bei einem Gebäudeinstallationssystem, bei dem grundsätzlich die Clusterheads ortsfest sind, wird man bevorzugt als Gateway einen Netzwerkteilnehmer auswählen, der ebenfalls ortsfest ist. Schließlich können in einem Cluster ortsfeste und mobile Netzwerkteilnehmer zusammengefasst sein. Weiteres Auswahlkriterium dürfte die Signalstärke sein, mit der ein Mitglied eines Clusters die Nachrichten des Clusterheads seines Clusters und diejenigen des benachbarten Clusters empfängt.

Bei dem in Figur 3a dargestellten Ausführungsbeispiel ist das Mitglied M₂ als Gateway für die Datenübermittlung von dem Clusterhead CH₁ des Clusters C₁ zu dem Clusterhead CH₃ des Clusters C₃ ausgewählt worden.

Die Organisation der Mitglieder eines Clusters durch einen zunächst bestimmten Clusterhead kann auch eine Umorganisation der Mitglieder einschließlich des Clusterheads in diesem Cluster beinhalten. Wird im Zuge der vorbeschriebenen Clusterbildung ein Netzwerkteilnehmer als neuer Clusterhead bestimmt und hat entsprechende Mitglieder für sein Cluster ermittelt, kann dieser Clusterhead seine Bestimmung auch auf ein anderes Mitglied dieses Clusters übertragen. Sinnvoll ist dieses beispielsweise dann, wenn im Rahmen eines Überprüfungsalgorithmus festgestellt wird, dass ein anderes Mitglied dieses Clusters besser für die Funktion eines Clusterheads geeignet ist, beispielsweise da dieses weniger beschränkte Ressourcen aufweist.

Nachfolgend ist der *Schritt 6,* namentlich die Suche nach statischen Einfach- und/oder Doppel-Gateways anhand eines Ausführungsbeispiels näher beschrieben, wobei diese Schritte als Unterschritte des vorbeschriebenen *Schrittes 6* anzusehen sind:

### Schritt 6.1:

Clusterhead, z.B. Clusterhead CH₁ sendet per Broadcast eine Nachricht an alle direkten Nachbarn, die die Suche initiiert. Gleichzeitig stellt er einen Timer auf eine Wartezeit, nach der die *Schritte 6.2 bis 6.8* garantiert abgeschlossen sind, siehe *Schritt 6.9.*

### Schritt 6.2:

Alle Netzwerkteilnehmer, die den Broadcast empfangen und nicht Clusterhead sind, warten eine zufällige Zeit und senden eine Einfach-Gateway-Bestätigungsnachricht. Die Bestätigungsnachricht enthält eine Liste von Adressen anderer Clusterheads, die variabel zwischen keiner Adresse, und einer vorgegebenen Maximalanzahl von Adressen liegen kann. Die Maximalanzahl wird durch die vorgesehene Maximallänge der Bestätigungsnachricht bestimmt. Die Adressen stammen aus einem Zwischenspeicher, in dem jeder Netzwerkteilnehmer eine begrenzte Anzahl von Clusterheads, die direkte Nachbarn sind, speichern kann.

### Schritt 6.3:

Die Bestätigungsnachricht wird vom Clusterhead aus *Schritt 6.1* empfangen, siehe dazu *Schritt 6.4.* Weiter wird die Bestätigungsnachricht von allen direkten Nachbarn empfangen, siehe *Schritt 6.5.*

### Schritt 6.4:

Clusterhead empfängt Einfach-Gateway-Bestätigungsnachricht und liest die Adressen aus. Es speichert bis zu einer Maximalanzahl Paare von Clusterhead- und Gateway-Adressen in den hierfür vorgesehenen Caches. Sofern eine ausgelesene Adresse noch nicht abgespeichert ist, speichert es die Adresse als Clusterhead-Adresse und Absenderadresse der Bestätigungsnachricht als Gateway-Adresse. Ist die ausgelesene Adresse bereits abgespeichert, so überschreibt es den abgespeicherten Eintrag, falls die empfangene Signalstärke besser ist, als die des gespeicherten Paares.

### Schritt 6.5:

Empfängt ein Netzwerkteilnehmer die Einfach-Gateway-Bestätigungsnachricht, ist er nicht Clusterhead und ist er nicht direkter Nachbar vom Clusterhead aus *Schritt 6.1,* dann sendet er nach einer zufälligen Wartezeit eine Doppel-Gateway-Bestätigungsnachricht. Diese Doppel-Gateway-Bestätigungsnachricht enthält eine Liste von Adressen anderer Clusterheads, die variabel zwischen keiner Adresse, und einer vorgegebenen Maximalanzahl von Adressen liegen kann. Die Maximalanzahl wird durch die vorgesehene Maximallänge der Bestätigungsnachricht bestimmt. Die Adressen stammen aus einem Zwischenspeicher, in dem jeder Netzwerkteilnehmer eine begrenzte Anzahl von Clusterheads, die direkte Nachbarn sind, speichern kann. Zudem speichert er seine eigene Adresse als äußeres Gateway in der Nachricht. Die Doppel-Gateway-Bestätigungsnachricht wird an den Absender der zuvor empfangenen Einfach-Gateway-Bestätigungsnachricht gesendet, siehe *Schritt 6.7.* Zudem wird sie von anderen Netzwerkteilnehmern mitgehört, siehe *Schritt 6.6.*

### Schritt 6.6:

Hört ein Netzwerkteilnehmer eine Doppel-Gateway-Bestätigungsnachricht aus *Schritt 6.5* mit und wartet er selbst gerade eine zufällige Zeit um anschließend auch eine Doppel-Gateway-Bestätigungsnachricht zu senden, dann prüft er für jede Adresse aus der Liste von Clusterhead-Adressen aus dem empfangenen Paket, ob diese Adresse im Zwischenspeicher für direkt erreichbare Clusterheads ist. Ist dies für mindestens eine Adresse der Fall, dann bricht der Netzwerkteilnehmer das geplante senden einer Doppel-Gateway-Bestätigungsnachricht ab.

Dieser Schritt führt eine Optimierung durch, indem er das Entstehen von Doppel-Gateways verhindert, falls dies zu redundanten Gateway-Pfaden führt. Wenn ein Netzwerkteilnehmer eine Doppel-Gateway-Bestätigungsnachricht mithört, dann kann er davon ausgehen, dass zu allen in dieser Nachricht aufgeführten Clusterheads eine Gateway-Verbindung ausgehend von dem Clusterhead in *Schritt 6.1* aufgebaut wird. Ist nun einer der in der Nachricht aufgeführten Clusterheads ein direkter Nachbar von ihm, dann weiß er, dass von allen seinen direkt benachbarten Clusterheads eine Einfach-Gateway-Verbindung zu diesem Clusterhead aufgebaut werden kann. Somit ist es nicht notwendig, dass er den Aufbau einer weiteren Doppel-Gateway-Verbindung veranlasst. Es versteht sich somit, dass eine Durchführung des *Schrittes 6.6* nicht zwingend erforderlich, gleichwohl zweckdienlich ist.

### Schritt 6.7:

Empfängt ein Netzwerkteilnehmer, der nicht Clusterhead ist, eine an ihn adressierte Doppel-Gateway-Bestätigungsnachricht, so sendet er das Paket an die im Paket gespeicherte Clusterhead-Adresse des Clusterheads in *Schritt 6.1* weiter.

### Schritt 6.8:

Clusterhead empfängt Doppel-Gateway-Bestätigungsnachricht und liest die Adressen aus. Es speichert bis zu einer Maximalanzahl Paare von Clusterhead- und Doppel-Gateway-Adressen. Sofern eine ausgelesene Adresse noch nicht abgespeichert ist, speichert es die Adresse als Clusterhead-Adresse und die im Paket gespeicherte äußere Gateway-adresse und die Absenderadresse der Bestätigungsnachricht als Doppel-Gateway-Adresse. Ist die ausgelesene Adresse bereits abgespeichert, so überschreibt es den abgespeicherten Eintrag, falls die empfangene Signalstärke besser ist, als die des gespeicherten Paares.

### Schritt 6.9:

Nach Ablauf der Wartezeit aus *Schritt 6.1* sendet der Clusterhead eine Gateway-Benennung und direkt im Anschluss eine Doppel-Gateway-Benennung an alle direkten Nachbarn. In die Gateway-Benennung schreibt es die Liste von Gateways, welche es in *Schritt 6.4* gespeichert hat. In die Doppel-Gateway-Benennung schreibt es die Liste von Paaren von Clusterheads und Doppel-Gateways, die es in *Schritt 6.8* gespeichert hat. Weiter speichert es die Paketwiederholungsanzahl "0" im Paket, sowie seine eigene Adresse als Ausgangs-Clusterhead.

### Schritt 6.10:

Empfängt ein Netzwerkteilnehmer, der nicht Clusterhead ist, die Gateway-Benennung aus *Schritt 6.9,* dann prüft er, ob seine eigene Adresse in der Liste der Gateways aufgeführt ist. Falls ja, wird dieser Netzwerkteilnehmer ein (statisches) Gateway.

### Schritt 6.11:

Empfängt ein Netzwerkteilnehmer, der nicht Clusterhead ist, die Doppel-Gateway-Benennung aus *Schritt 6.9* mit Paketwiederholungsanzahl "0", dann prüft er, ob seine eigene Adresse in der Liste der Doppel-Gateways aufgeführt ist. Falls ja, setzt er die Paketwiederholungsanzahl auf "1", sendet nach einer zufälligen Wartezeit das Paket an alle direkten Nachbarn und wird ein (statisches) Doppel-Gateway.

### Schritt 6.12:

Empfängt ein Netzwerkteilnehmer, der nicht Clusterhead ist, die Doppel-Gateway-Benennung aus *Schritt 6.11* mit Paketwiederholungsanzahl "1", dann prüft er, ob seine eigene Adresse in der Liste der Doppel-Gateways aufgeführt ist. Falls ja, setzt er die Paketwiederholungsanzahl auf "2", sendet nach einer zufälligen Wartezeit das Paket an alle direkten Nachbarn und wird ein (statisches) Doppel-Gateway. Falls nein, sucht er aus der Liste den Doppel-Gateway-Eintrag heraus, in dem der Absender des empfangen Pakets steht, sowie den zugehörigen Clusterhead-Eintrag. Steht die Clusterhead-Adresse auch im Zwischenspeicher (Cache) für direkt erreichbare Clusterheads, dann fügt der Netzwerkteilnehmer die Adresse des Absenders zum Doppel-Gateway-Zwischenspeicher hinzu.

### Schritt 6.13:

Empfängt ein Netzwerkteilnehmer, der nicht Clusterhead ist, die Doppel-Gateway-Benennung aus *Schritt 6.12* mit Paketwiederholungsanzahl "2", dann prüft er, ob die Adresse des Ausgangs-Clusterheads im Zwischenspeicher für direkt erreichbare Clusterheads ist. Falls ja, fügt er die Adresse des Absenders zum Doppel-Gateway-Zwischenspeicher hinzu.

### Erläuterung zu den Schritten 6.12 und 6.13:

In den *Schritten 6.12 und 6.13* fügt ein Netzwerkteilnehmer die Adresse eines Doppel-Gateway-Netzwerkteilnehmers zum Doppel-Gateway-Zwischenspeicher hinzu, wenn der Netzwerkteilnehmer den anderen Netzwerkteilnehmer des Doppel-Gateway-Paars überbrücken kann. Angenommen zwischen den Clusterheads CH₁ und CH₂ wird mit zwei Doppel-Gateway-Netzwerkteilnehmern DGW₁ und DGW₂ eine Doppel-Gateway-Verbindung CH₁ - DGW₁ - DGW₂ - CH₂ aufgebaut. Dann fügt ein Netzwerkteilnehmer die Adresse von DGW₂ zum Doppel-Gateway-Zwischenspeicher hinzu, wenn CH₁ und DGW₂ direkte Nachbarn von ihm sind. Wenn stattdessen DGW₁ und CH₂ direkte Nachbarn von ihm sind, dann fügt er DGW₁ zum Doppel-Gateway-Zwischenspeicher hinzu.

Der vorstehend detailliert beschriebene *Schritt 6* lässt sich auch in solchen Netzwerken durchführen, in denen die Clusterbildung auf andere Weise, als vorstehend in den *Schritten 1 bis 5* beschrieben. Erforderlich ist lediglich, dass die Netzwerkteilnehmer eines Netzwerkes in Clustern organisiert sind.

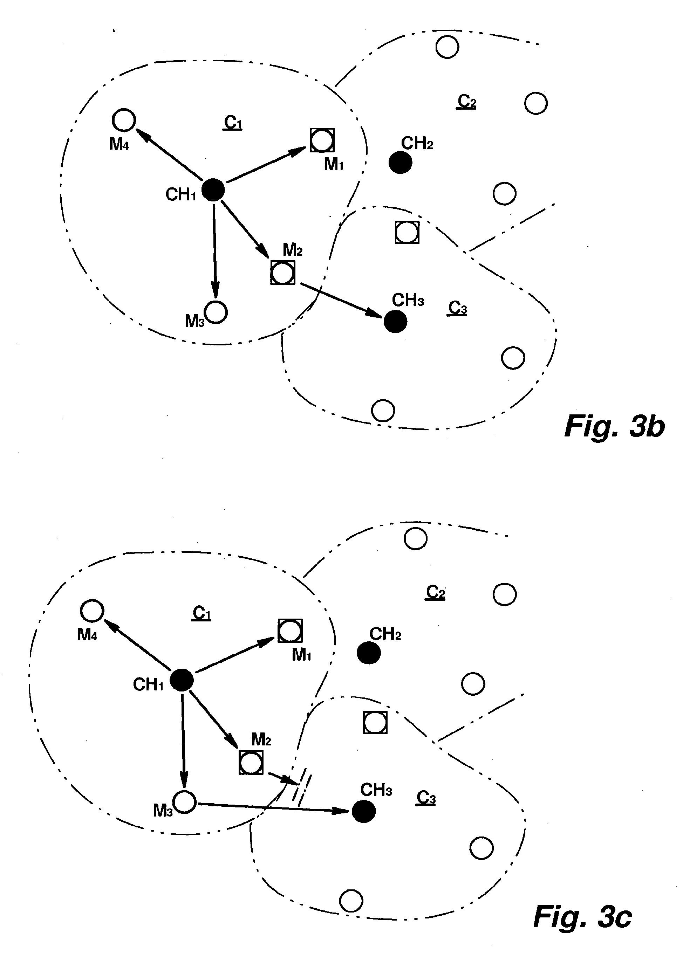

Figur 3b veranschaulicht eine Nachrichtenübermittlung ausgehend beispielhaft von dem Clusterhead CH₁ wobei im Folgenden nur die Datenübermittlung zu dem Clusterhead CH₃ des benachbarten Clusters C₃ beleuchtet wird. CH₁ sendet eine Nachricht als Broadcast. Diese wird von allen Clustermitgliedern M₁ - M₄ empfangen. Während die Mitglieder M₁, M₃ und M₄ die empfangene Nachricht speichern und sich ansonsten ruhig verhalten, wiederholt das als Gateway fungierende Mitglied M₂ des Clusters C₁ die empfangenen Daten, typischerweise nach einer gewissen Delay-Zeit. Auf dieser Weise gelangen die Daten zu dem Clusterhead CH₃ der durch Wiederholen derselben diese weiterverbreitet. Es versteht sich, dass die Nachrichtenausbreitung parallel in alle Nachbarcluster des Clusters CH₁ über die jeweiligen Gateways erfolgt. Bei diesem Konzept wiederholen somit nur diejenigen Netzwerkteilnehmer, die Clusterhead, statisches Gateway oder statisches Doppel-Gateway sind, den empfangenen Broadcast nach einer zufällig gewählten, kurzen Wartezeit. Dann wird das Datenpaket (der Broadcast) an alle direkten Nachbarn verschickt. Weitere Kopien, die von diesen Netzwerkteilnehmern empfangen werden, werden ignoriert.

Jeder andere Netzwerkteilnehmer stellt beim Empfang der ersten Kopie dieses Pakets einen Timer auf eine zufällig gewählte, längere Wartezeit. Beim ersten Empfang und jedem weiteren Empfang einer Kopie prüft er, ob die Absenderadresse der empfangen Kopie im Zwischenspeicher für direkt erreichbare Clusterheads oder im Doppel-Gateway-Zwischenspeicher ist. Falls ja, protokolliert er dies. Nach Ablauf der Wartezeit überprüft der Netzwerkteilnehmer anhand des Protokolls, ob für alle Adressen aus dem Zwischenspeicher für direkt erreichbare Clusterheads und dem Doppel-Gateway-Zwischenspeicher ein Empfang einer Kopie vermerkt wurde. Falls nein, wird das Paket an alle direkten Nachbarn verschickt.

Das Mitglied M₃ des Clusters C₁ befindet sich im Sendebereich sowohl des Clusterheads CH₁ als auch des Clusterheads CH₃. Wird die Nachricht bestimmungsgemäß von dem Gateway M₂ an den Clusterhead CH₃ übertragen und von diesem wiederholt, empfängt auch das Mitglied M₃ die von dem Clusterhead CH₃ wiederholte Nachricht. Aufgrund der darin enthaltenen Identifikation des Clusterheads CH₃ kann diese empfangene Nachricht von dem Mitglied M₃ dem Clusterhead CH₃ zugeordnet werden. Sodann wird in dem Mitglied M₃ die von dem Clusterhead CH₁ ursprünglich empfangene Nachricht gelöscht bzw. der Überprüfungsalgorithmus zurückgesetzt.

Empfängt das Mitglied M₃ des Clusters C₁ innerhalb einer vorgegebenen Zeitperiode keine von dem Clusterhead CH₃ wiederholte Nachricht, hat offenbar die vorgesehene Datenübertragung nicht geklappt (siehe hierzu Figur 3c). Dieses kann an einer Störung in der Funkübertragung auf der Strecke vom Clusterhead CH₁ an das Gateway M₂ und/oder von dem Gateway M₂ an den Clusterhead CH₃ liegen. Möglicherweise liegt auch eine Störung in einem dieser Netzwerkteilnehmer vor. Dann wiederholt das Mitglied M₃ die von dem Clusterhead CH₁ empfangene Nachricht, welche Nachricht sodann von dem Clusterhead CH₃ empfangen werden kann. Hat der Clusterhead CH₃ die Nachricht dann von dem Mitglied M₃ empfangen, wiederholt der Clusterhead CH₃ diese zum Zwecke der weiteren Ausbreitung. Auch dieses kann von dem Mitglied M₃ überwacht werden, da dieses die dann von dem Clusterhead CH₃ wiederholte Nachricht ebenfalls empfängt. Sollte nach einer vorgegebenen Zeitspanne das Mitglied M₃ immer noch keine Wiederholungsnachricht des Clusterheads CH₃ empfangen haben, kann dieses die Nachricht selbst nochmals wiederholen.

Der beschriebene Algorithmus macht deutlich, dass bei diesem Konzept zwar vorgegebene Datenübertragungsstrecken vorgesehen sind, so dass grundsätzlich die Zahl der Wiederholungen und daher eine Kollisionsgefahr auf ein Minimum reduziert ist, dennoch ein Überwachungsmechanismus eingebaut ist, der den Fortschritt der Übertragung von einem Clusterhead zum nächsten überwacht und, sollte eine bestimmungsgemäße Übertragung nicht festgestellt werden, aktiv eingreift, um die Informationsübertragung nicht abreißen zu lassen. Bei dem beschriebenen Ausführungsbeispiel wurde lediglich ein Mitglied, namentlich das Mitglied M₃, in der Funktion als Überwachungsmitglied in der Kommunikation zwischen dem Clusterhead CH₁ und dem Clusterhead CH₃ beschrieben. Es versteht sich, dass auch mehrere Mitglieder eines Clusters, vor allem wenn diese eine größere Anzahl an Mitgliedern aufweisen, diese Funktion übernehmen können, auch parallel nebeneinander.

Die vorbeschriebene Überwachung erfolgt prinzipiell gleich auch bei einem Einsatz eines Doppel-Gateways zwischen zwei Clusterheads. In einem solchen Fall kennen diese Mitglieder die Identifikation des jeweils an dem Doppel-Gateway beteiligten weiteren Mitglieds des anderen Clusters.

Bei dem dargestellten Ausführungsbeispiel verfügen die Netzwerkmitglieder über IEEE 802.15.4-kompatible Funkempfänger. Selbstverständlich können zum Durchführen des Verfahrens auch andere Funkempfänger (Funkknoten) oder auch andere Kommunikationstechnologien eingesetzt werden.

Das vorbeschriebene Verfahren zum Betrieb eines durch Clusterbildung eingerichteten Verbindungsnetzwerkes kann auch bei solchen Verbindungsnetzwerken durchgeführt werden, die nicht notwendigerweise mit dem vorbeschriebenen Initialisierungsalgorithmus eingerichtet worden sind. Erforderlich ist lediglich, dass neben dem oder den Gateways ein oder mehrere Mitglieder der durch das Gateway verbundenen Cluster nicht nur die Identifikation des eigenen Clusterheads sondern auch diejenige des benachbarten Clusterheads oder diejenige eines Mitgliedes des benachbarten Clusters kennen, wobei im letzteren Falle diese beiden Mitglieder sodann ein Doppel-Gateway bilden.

Durch die vorbeschriebene Überwachung der Informationsübertragung werden nicht nur Störungen auf der Funkstrecke überbrückt. Eine Nachrichtenübermittlung erfolgt auch über eine der Ausweichrouten, wenn ein Netzwerkteilnehmer, über den die Kommunikation läuft, durch einen Sendebetrieb blockiert oder beschädigt ist. Hervorzuheben ist in diesem Zusammenhang, dass die Überwachung und ein unter Umständen notwendig werdender Eingriff ohne eine große Anzahl an Nachrichtenwiederholungen erfolgt und daher eine Kollisionsgefahr auf ein Minimum reduziert ist. Aus diesem Grunde zeichnet sich ein Verbindungsnetzwerk, welches auf diese Weise hinsichtlich seiner Nachrichtenübertragung betrieben wird, als besonders robust aus.

Die Erfindung ist anhand eines Verbindungsnetzwerkes beschrieben worden, bei dem die einzelnen Netzwerkteilnehmer in einer Funkverbindung zueinander stehen. Es versteht sich, dass es bei diesem Verfahren nicht auf das Transportmedium ankommt. Daher kann eine Datenübertragung auch leitungsgebunden oder auch gemischt (hybrid) erfolgen. Ebenfalls können andere leitungsungebundene Übertragungswege vorgesehen sein, beispielsweise optische.

Ohne den Umfang der geltenden Ansprüche zu verlassen, ergeben sich für einen Fachmann zahlreiche weitere Ausgestaltungen, die Erfindung verwirklichen zu können, ohne dass diese im Rahmen dieser Ausführungen näher beschrieben werden müsste.

## Patentansprüche

1. Verfahren zum Betreiben eines eine Vielzahl von Netzwerkteilnehmern aufweisenden Multi-Hop-Verbindungsnetzwerkes, welche Netzwerkteilnehmer zur Ausbildung des Verbindungsnetzwerkes durch Bilden einer Vielzahl von jeweils einen Clusterhead (CH₁, CH₂, CH₃) aufweisenden Clustern (C₁, C₂, C₃) mit wenigstens einem Mitglied (M₁, M₂, M₃, M₄) eingerichtet worden sind, **dadurch gekennzeichnet, dass** bei der Übermittlung einer Information durch das Verbindungsnetzwerk der Übermittlungsfortschritt einer von einem Clusterhead (CH₁, CH₂, CH₃) gesendeten Nachricht überwacht wird, indem
- jedes Mitglied (M₁, M₂, M₃, M₄) des Clusters (C₁, C₂, C₃), in dem der sendende Clusterhead (CH₁, CH₂, CH₃) angeordnet ist, diese Nachricht empfängt,
- die Nachricht von zumindest einem Gateway dieses Clusters (C₁, C₂, C₃) weitergesendet wird und
- diese von dem Clusterhead (CH₁, CH₂, CH₃) gesendete und von einem Nicht-Gateway-Mitglied dieses Clusters (C₁, C₂, C₃), welches Mitglied (M₁, M₂, M₃, M₄) die Identifikation eines Clusterheads (CH₁, CH₂, CH₃) oder eines Gateways des benachbarten Clusters (C₁, C₂, C₃) gespeichert hat, empfangene Nachricht nochmals gesendet wird, wenn innerhalb einer vorgegebenen Wartezeit dieses Mitglied (M₁, M₂, M₃, M₄) die Nachricht nicht mit der Identifikation des Clusterheads (CH₁, CH₂, CH₃) oder eines Gateways des benachbarten Clusters (C₁, C₂, C₃) empfangen hat.

2. Verfahren nach Anspruch 1, **dadurch gekennzeichnet, dass** für den Fall, dass die von dem Clusterhead (CH₁, CH₂, CH₃) gesendete Nachricht von mehreren Nicht-Gateway-Mitgliedern dieses Clusters (C₁, C₂, C₃) empfangen wird, jedes dieser Nicht-Gateway-Mitglieder in einen Modus geschaltet wird, die empfange Nachricht nach Ablauf einer zufälligen Wartezeit zu wiederholen, wobei sich die zufällige Wartezeit dieser Nicht-Gateway-Mitglieder voneinander unterscheiden, und dass der Modus zum Wiederholen der Nachricht ausgeschaltet wird, wenn ein solches Nicht-Gateway-Mitglied die von einem anderen Nicht-Gateway-Mitglied wiederholte Nachricht empfangen hat.

3. Verfahren nach Anspruch 1 oder 2, **dadurch gekennzeichnet, dass** durch das Verfahren die Vielzahl der Netzwerkteilnehmer zur Ausbildung des Verbindungsnetzwerkes durch Bilden einer Vielzahl von jeweils einen Clusterhead (CH₁, CH₂, CH₃) aufweisenden Clustern (C₁, C₂, C₃) mit wenigstens einem Mitglied (M₁, M₂, M₃, M₄) eingerichtet werden, indem die Verbindungsnetzwerkeinrichtung selbstorganisierend mit folgenden Schritten durchgeführt wird:
*Schritt 1:* Von zumindest einem ersten, als Clusterhead (CH₁, CH₂, CH₃) definierten Netzwerkteilnehmer wird ein Initialisierungsbroadcast gesendet;
*Schritt 2*: alle Teilnehmer, die diesen Initialisierungsbroadcast mit hinreichender Signalstärke empfangen, speichern die darin enthaltene Clusterhead-Identifikation und antworten durch Senden einer Empfangsbestätigungsbotschaft;
*Schritt 3*: der den Initialisierungsbroadcast sendende Clusterhead (CH₁, CH₂, CH₃) speichert eine vorbestimmte Maximalanzahl an Netzwerkteilnehmeridentifikationen, empfangen mit jeder Empfangsbestätigungsbotschaft, welche Netzwerkteilnehmer, deren Identifikation vom Clusterhead (CH₁, CH₂, CH₃) gespeichert wird, zusammen mit diesem Clusterhead (CH₁, CH₂, CH₃) ein Cluster bilden;
*Schritt 4:* empfängt ein Clusterhead (CH₁, CH₂, CH₃) die Empfangsbestätigungsbotschaft eines Netzwerkteilnehmers, dessen Identifikation nicht gespeichert werden soll oder nicht gespeichert werden kann, sendet dieser Clusterhead (CH₁) CH₂, CH₃) eine die Identifikation des Netzwerkteilnehmers enthaltende Ablehnungsbotschaft;
*Schritt 5*: diejenigen Netzwerkteilnehmer, die eine solche Ablehnungsbotschaft mit ihrer Identifikation von allen in Reichweite befindlichen Clusterheads (CH₁, CH₂, CH₃) erhalten, werden mit dem Empfang dieser Botschaft selbst zu einem Clusterhead (CH₁, CH₂, CH₃) und senden entsprechend *Schritt 1* einen Initialisierungsbroadcast; anschließend werden die vorstehenden Schritte beginnend mit *Schritt 2* mit der Maßgabe ausgeführt, dass zwar alle Netzwerkteilnehmer, die den Initialisierungsbroadcast dieses Clusterheads (CH₁, CH₂, CH₃) mit hinreichender Signalstärke empfangen, die Identifikation dieses Clusterheads (CH₁, CH₂, CH₃) speichern, allerdings nur diejenigen Netzwerkteilnehmer eine Empfangsbestätigungsbotschaft senden, die zuvor noch keine Identifikation eines Clusterheads (CH₁, CH₂, CH₃) gespeichert hatten, wobei *Schritt 5* solange weiterläuft, bis alle Netzwerkteilnehmer einem Clusterhead (CH₁, CH₂, CH₃) zugeordnet sind;
*Schritt 6*: Auswahl jeweils zumindest eines Clustermitgliedes eines Clusters (C₁, C₂, C₃) als Gateway für die Kommunikation zwischen dem Clusterhead (CH₁, CH₂, CH₃) dieses Clusters (C₁, C₂, C₃) und demjenigen eines benachbarten Clusters (C₁, C₂, C₃).

4. Verfahren nach Anspruch 3, **dadurch gekennzeichnet, dass** in *Schritt 2* die Netzwerkteilnehmer, die den Initialisierungsbroadcast empfangen und die Clusterhead-Identifikation gespeichert haben, die Empfangsbestätigungsbotschaft erst nach Ablauf einer Wartezeit senden, wobei die von dem Clusterhead (CH₁, CH₂, CH₃) angesprochenen Netzwerkteilnehmer ihre Empfangsbestätigungsbotschaft zeitversetzt senden.

5. Verfahren nach Anspruch 4, **dadurch gekennzeichnet, dass** von einem Clusterhead (CH₁, CH₂, CH₃) eine Ablehnungsbotschaft gemäß *Schritt 4* erst dann gesendet wird, wenn keine weiteren Netzwerkteilnehmer mehr in dieses Cluster (C₁, C₂, C₃) aufgenommen werden.

6. Verfahren nach einem der Ansprüche 3 bis 5, **dadurch gekennzeichnet, dass** die Maximalanzahl der neben dem Clusterhead (CH₁, CH₂, CH₃) einem Cluster (C₁, C₂, C₃) zugehörigen Mitglieder (M₁, M₂, M₃, M₄) zahlenmäßig begrenzt ist, wobei die Anzahl der Mitglieder (M₁, M₂, M₃, M₄) eines Clusters (C₁, C₂, C₃) einem Bruchteil der Gesamtanzahl der Netzwerkteilnehmer entspricht.

7. Verfahren nach Anspruch 6, **dadurch gekennzeichnet, dass** ein Cluster (C₁, C₂, C₃) maximal 32 Mitglieder (M₁, M₂, M₃, M₄) umfasst.

8. Verfahren nach einem der Ansprüche 3 bis 7, **dadurch gekennzeichnet, dass** nur diejenigen Netzwerkteilnehmer gemäß *Schritt 2* eine Empfangsbestätigungsbotschaft senden, wenn der empfangene Initialisierungsbroadcast hinsichtlich seiner Signalstärke einen vorgegebenen Schwellwert überschritten hat.

9. Verfahren nach einem der Ansprüche 3 bis 8, **dadurch gekennzeichnet, dass** von einem Clusterhead (CH₁, CH₂, CH₃) gemäß *Schritt 3* nur die Teilnehmeridentifikation derjenigen Empfangsbestätigungsbotschaften gespeichert werden, die hinsichtlich der Signalstärke des Empfangssignals einen vorgegebenen Schwellwert überschritten haben.

10. Verfahren nach einem der Ansprüche 3 bis 9, **dadurch gekennzeichnet, dass** demjenigen Mitglied (M₁, M₂, M₃, M₄) eines Clusters (C₁, C₂, C₃) die Funktion eines Gateways zugeteilt wird, welches die Signale des Clusterheads (CH₁, CH₂, CH₃) des Clusters (C₁, C₂, C₃), dem dieses Mitglied (M₁, M₂, M₃, M₄) zugehörig ist, sowie diejenigen Signale des Clusterheads (CH₁, CH₂, CH₃) des benachbarten Clusters (C₁, C₂, C₃) mit der höchsten Signalstärke empfängt.

## Claims

1. Method for operating a multi-hop connection network comprising a plurality of network participants, said network participants being arranged for the formation of the connection network by the formation of a plurality of clusters (C₁, C₂, C₃) with at least one member (M₁, M₂, M₃, M₄), in each case comprising a cluster head (CH₁, CH₂, CH₃), **characterised in that**, at the transmission of an item of information through the network, the progress of the transmission is monitored by a message sent by a cluster head (CH₁, CH₂, CH₃), **in that**
- each member (M₁, M₂, M₃, M₄) of the cluster (C₁, C₂, C₃), arranged in the transmitting cluster head (CH₁, CH₂, CH₃), receives this message,
- the message is forwarded by at least one gateway of this cluster (C₁, C₂, C₃), and
- this message, sent by the cluster head (CH₁, CH₂, CH₃) and received by a non-gateway member of this cluster (C₁, C₂, C₃), which member (M₁, M₂, M₃, M₄) has stored the identification of a cluster head (CH₁, CH₂, CH₃) or of a gateway of the adjacent cluster (C₁, C₂, C₃), is transmitted again if, within a specified waiting time, this member (M₁, M₂, M₃, M₄) has not received the message with the identification of the cluster head (CH₁, CH₂, CH₃) or of a gateway of the adjacent cluster (C₁, C₂, C₃).

2. Method according to claim 1, **characterised in that**, in the event of the message sent by the cluster head (CH₁, CH₂, CH₃) being received by several non-gateway members of this cluster (C₁, C₂, C₃), each of these non-gateway members is switched into a mode to repeat the received message after the expiry of a random waiting time, wherein the random waiting times of these non-gateway members differ from one another, and that the mode for repeating the message is switched off if such a non-gateway member has received the repeated message from another non-gateway member.

3. Method according to claim 1 or 2, **characterised in that**, by way of the method, the plurality of network participants are arranged for the formation of the connection network by the formation of a plurality of clusters (C₁, C₂, C₃) with at least one member (M₁, M₂, M₃, M₄), in each case comprising a cluster head (CH₁, CH₂, CH₃), **in that** the connection network arrangement is carried out in a self-organizing manner with the following steps:
*Step 1*: An initializing broadcast is sent by at least one first network participant, defined as a cluster head (CH₁, CH₂, CH₃);
*Step 2*: All the participants who receive this initialization broadcast with adequate signal strength store the cluster head identification contained in it, and respond by sending a reception confirmation message;
*Step 3*: The cluster head (CH₁, CH₂, CH₃) which sent the initialization broadcast stores a predetermined maximum number of network participant identifications, received with every reception confirmation message, those network participants whose identification is stored by the cluster head (CH₁, CH₂, CH₃) forming, together with this cluster head (CH₁, CH₂, CH₃), a cluster;
*Step 4*: If a cluster head (CH₁, CH₂, CH₃) receives the reception confirmation message from a network participant of whom the identification should not or cannot be stored, this cluster head (CH₁, CH₂, CH₃) sends a rejection message containing the identification of the network participant;
*Step 5*: Those network participants who receive such a rejection message with their identification from all the cluster heads (CH₁, CH₂, CH₃) located in range themselves become, on receipt of this message, a cluster head (CH₁, CH₂, CH₃), and send, in accordance with *Step 1*, an initializing broadcast; the foregoing steps, beginning with *Step 2,* are then carried out, with the proviso that it may indeed be all the network participants who receive the initializing broadcast from this cluster head (CH₁, CH₂, CH₃) with sufficient signal strength who store the identification of this cluster head (CH₁, CH₂, CH₃), but only those network participants send a reception confirmation message who had not previously stored any identification of a cluster head (CH₁, CH₂, CH₃), wherein *Step 5* continues to run until all the network participants are allocated to a cluster head (CH₁, CH₂, CH₃);
*Step 6*: Selection in each case of at least one cluster member of a cluster (C₁, C₂, C₃) as a gateway for the communication between the cluster head (CH₁, CH₂, CH₃) of this cluster (C₁, C₂, C₃) and that of an adjacent cluster (C₁, C₂, C₃).

4. Method according to claim 3, **characterised in that** in *Step 2* the network participants who receive the initializing broadcast and have stored the cluster head identification only send the reception confirmation message after the expiry of a waiting time, wherein the network participants addressed by the cluster head (CH₁, CH₂, CH₃) send their reception confirmation message with a time delay.

5. Method according to claim 4, **characterised in that** a rejection message according to *Step 4* is only sent by a cluster head (CH₁, CH₂, CH₃) if no further network participants are being adopted into this cluster (C₁, C₂, C₃).

6. Method according to any one of claims 3 to 5, **characterised in that** the maximum number of the members (M₁, M₂, M₃, M₄) belonging to a cluster (C₁, C₂, C₃), as well as the cluster head (CH₁, CH₂, CH₃), is limited in number, wherein the number of the members (M₁, M₂, M₃, M₄) of a cluster (C₁, C₂, C₃) corresponds to a fraction of the total number of network participants.

7. Method according to claim 6, **characterised in that** a cluster (C₁, C₂, C₃) comprises a maximum of 32 members (M₁, M₂, M₃, M₄).

8. Method according to any one of claims 3 to 7, **characterised in that** only those network participants according to *Step 2* send a reception confirmation message if the received initialization broadcast has exceeded a specified threshold value in respect of its signal strength.

9. Method according to any one of claims 3 to 8, **characterised in that**, of a cluster head (CH₁, CH₂, CH₃) according to *Step 3*, only the participant identification is stored of those reception confirmation messages which have exceeded a specified threshold value in respect of the signal strength of the reception signal.

10. Method according to any one of claims 3 to 9, **characterised in that** the function of a gateway is allocated to that member (M₁, M₂, M₃, M₄) of a cluster (C₁, C₂, C₃) which receives the signals of the cluster head (CH₁, CH₂, CH₃) of the cluster (C₁, C₂, C₃) to which this member (M₁, M₂, M₃, M₄) belongs, as well as those signals of the cluster head (CH₁, CH₂, CH₃) of the adjacent cluster (C₁, C₂, C₃), with the highest signal strength.

## Revendications

1. Procédé de fonctionnement d'un réseau de liaison à sauts multiples présentant une multitude de participants au réseau, lesquels participants au réseau ont été organisés pour constituer le réseau de liaison en formant une multitude de clusters (C₁, C₂, C₃) présentant respectivement une tête de cluster (CH₁, CH₂, CH₃) avec au moins un membre (M₁, M₂, M₃, M₄), **caractérisé en ce que** lors de la transmission d'une information par le réseau de liaison, la progression de la transmission d'une information envoyée par une tête de cluster (CH₁, CH₂, CH₃) est surveillée par le fait que
- chaque membre (M₁, M₂, M₃, M₄) du cluster (C₁, C₂, C₃) dans lequel est disposée la tête de cluster (CH₁, CH₂, CH₃) émettrice, réceptionne cette information,
- l'information est réacheminée par au moins une passerelle de ce cluster (C₁, C₂, C₃) et
- cette information envoyée par la tête de cluster (CH₁, CH₂, CH₃) et réceptionnée par un membre non-passerelle de ce cluster (C₁, C₂, C₃), lequel membre (M₁, M₂, M₃, M₄) a mémorisé l'identification d'une tête de cluster (CH₁, CH₂, CH₃) ou d'une passerelle du cluster (C₁, C₂, C₃) voisin, est envoyée une nouvelle fois si, au cours d'une période d'attente prédéfinie, ce membre (M₁, M₂, M₃, M₄) n'a pas réceptionné l'information avec l'identification de la tête de cluster (CH₁, CH₂, CH₃) ou d'une passerelle du cluster (C₁, C₂, C₃) voisin.

2. Procédé selon la revendication 1, **caractérisé en ce que**, au cas où l'information envoyée par la tête de cluster (CH₁, CH₂, CH₃) est réceptionnée par plusieurs membres non-passerelles de ce cluster (C₁, C₂, C₃), chacun de ces membres non-passerelles est commuté dans un mode de répétition de l'information après écoulement d'une période d'attente aléatoire, les périodes d'attente aléatoires de ces membres non-passerelles se différenciant les unes des autres et **en ce que** le mode de répétition de l'information est désactivé quand un tel membre non-passerelle a réceptionné l'information répétée par un autre membre non-passerelle.

3. Procédé selon la revendication 1 ou 2, **caractérisé en ce que** le procédé organise la multitude de participants au réseau afin de constituer un réseau de liaison en formant une multitude de clusters (C₁, C₂, C₃) présentant respectivement une tête de cluster (CH₁, CH₂, CH₃) avec au moins un membre (M₁, M₂, M₃, M₄), la configuration du réseau de liaison s'auto-organisant selon les étapes suivantes :
*Étape 1 :* une diffusion générale d'initialisation est envoyée par au moins un premier participant au réseau défini en tant que tête de cluster (CH₁, CH₂, CH₃) ;
*Étape 2 :* tous les participants qui réceptionnent cette diffusion générale d'initialisation avec une puissance de signal suffisante, mémorisent l'identification de la tête de cluster qu'elle contient et répondent en envoyant un message d'accusé de réception ;
*Étape 3 :* la tête de cluster (CH₁, CH₂, CH₃) envoyant la diffusion générale d'initialisation mémorise un nombre maximum prédéfini d'identifications des participants au réseau, réceptionnées avec chaque message d'accusé de réception, lesquels participants au réseau, dont l'identification est mémorisée par la tête de cluster (CH₁, CH₂, CH₃) forment avec cette tête de cluster (CH₁, CH₂, CH₃) un cluster ;
*Étape 4 :* si une tête de cluster (CH₁, CH₂, CH₃) réceptionne le message d'accusé de réception d'un participant au réseau dont l'identification ne doit pas être mémorisée ou ne peut pas être mémorisée, cette tête de cluster (CH₁, CH₂, CH₃) émet un message de rejet contenant l'identification du participant au réseau ;
*Étape 5 :* les participants au réseau recevant un tel message de rejet avec leur identification de toutes les têtes de clusters (CH₁, CH₂, CH₃) se trouvant à portée de signal, deviennent eux-mêmes, par la réception de ce message, une tête de cluster (CH₁, CH₂, CH₃) et envoient, selon l*'étape 1*, une diffusion générale d'initialisation ; puis les étapes suivantes, à commencer par l*'étape 2*, sont exécutées en respectant la consigne que tous les participants au réseau, qui réceptionnent la diffusion générale d'initialisation de cette tête de cluster (CH₁, CH₂, CH₃) avec une puissance de signal suffisante, mémorisent certes l'identification de cette tête de cluster (CH₁, CH₂, CH₃), mais que seuls les participants au réseau n'ayant au préalable pas encore mémorisé l'identification d'une tête de cluster (CH₁, CH₂, CH₃) envoient un message d'accusé de réception, l*'étape* 5 se poursuivant jusqu'à ce que tous les participants au réseau soient affectés à une tête de cluster (CH₁, CH₂, CH₃) ;
*Étape 6 :* Sélection d'au moins un membre de cluster d'un cluster (C₁, C₂, C₃) en tant que passerelle pour la communication entre la tête de cluster (CH₁, CH₂, CH₃) de ce cluster (C₁, C₂, C₃) et celui d'un cluster (C₁, C₂, C₃) voisin.

4. Procédé selon la revendication 3, **caractérisé en ce que**, à l*'étape 2,* les participants au réseau qui réceptionnent la diffusion générale d'initialisation et qui ont mémorisé l'identification de la tête de cluster, n'envoient le message d'accusé de réception qu'après écoulement d'une période d'attente, les participants au réseau interpellés par la tête de cluster (CH₁, CH₂, CH₃) envoyant leur message d'accusé de réception en différé.

5. Procédé selon la revendication 4, **caractérisé en ce qu'**une tête de cluster (CH₁, CH₂, CH₃) n'envoie un message de rejet selon l'étape 4 que si d'autres participants au réseau ne peuvent plus être admis dans ce cluster (C₁, C₂, C₃).

6. Procédé selon l'une des revendications 3 à 5, **caractérisé en ce que** le nombre maximal de membres (M₁, M₂, M₃, M₄) faisant partie, en plus de la tête de cluster (CH₁, CH₂, CH₃), d'un cluster (C₁, C₂, C₃) est limité en nombre, le nombre de membres (M₁, M₂, M₃, M₄) d'un cluster (C₁, C₂, C₃) correspondant à une fraction du nombre total de participants au réseau.

7. Procédé selon la revendication 6, **caractérisé en ce qu'**un cluster (C₁, C₂, C₃) comprend au maximum 32 membres (M₁, M₂, M₃, M₄).

8. Procédé selon l'une des revendications 3 à 7, **caractérisé en ce que** seuls les participants au réseau envoient un message d'accusé de réception selon l*'étape 2*, si la diffusion générale d'initialisation réceptionnée a dépassé, en ce qui concerne la puissance du signal, une valeur de seuil prédéfinie.

9. Procédé selon l'une des revendications 3 à 8, **caractérisé en ce qu'**une tête de cluster (CH₁, CH₂, CH₃) ne mémorise selon l*'étape 3* que les identifications des participants dont les messages d'accusé de réception qui, en ce qui concerne la puissance du signal de réception, ont dépassé une valeur de seuil prédéfinie.

10. Procédé selon l'une des revendications 3 à 9, **caractérisé en ce que** l'on attribue au membre (M₁, M₂, M₃, M₄) d'un cluster (C₁, C₂, C₃) la fonction d'une passerelle, laquelle réceptionne les signaux d'une tête de cluster (CH₁, CH₂, CH₃) du cluster (C₁, C₂, C₃) auquel appartient ce membre (M₁, M₂, M₃, M₄), de même que les signaux de la tête de cluster (CH₁, CH₂, CH₃) du cluster (C₁, C₂, C₃) voisin avec la puissance de signal la plus élevée.
